# EUROPEAN PATENT APPLICATION

(11) **EP 1 227 666 A1**
(43) Date of publication of application: **31.07.2002**
(21) Application number: 01300429.6
(22) Date of filing: 18.01.2001
(51) Int. Cl.: H04N 5/00

(54) **Method and device for downloading application data**

(71) Applicant: Sony Service Centre (Europe) N.V., 1840 Londerzeel (BE)
(72) Inventor: Skaringer, Lars, c/o Sony Digital Media Europe, 1130 Brussels (BE); Thiery, Olivier, c/o Sony Digital Media Europe, 1130 Brussels (BE); Fouss, Sebastien, c/o Sony Digital Media Europe, 1130 Brussels (BE)
(74) Representative: Ayers, Martyn Lewis Stanley

(57) **Abstract**

A method and device for downloading application data from a distributed application environment by requesting the downloading of a target object, downloading the target object, processing the target object, and where necessary, requesting the downloading of another object on which the target object depends. Simultaneous with processing the target object, the target object is parsed so as to determine all of the objects on which the target object depends and the objects are downloaded and stored such that the another object can be retrieved in response to the step of requesting the downloading of the another object.

## Description

The present invention relates to a method and device for downloading application data, in particular from a distributed application environment, for instance downloading Java classes carried in a transport stream from a DSM-CC Object Carousel.

Various distributed application environments are known in which application data is provided in a distributed state such that devices do not download an application as a single unit, but download an application in parts, eg. separate sections or packets.

It is known to load application data from high-latency file systems such as DSM-CC Object Carousels. In particular, various files, such as Java classes may be reformatted as BIOPs as part of a DSM-CC Object Carousel, combined into modules for a DSM-CC data carousel and then transmitted as DVB or MPEG sections.

End users download appropriate sections from the transport stream and reconstruct a desired object or file.

Typically, files are inter-related. Hence, interactive television services may provide one page for display according to a particular downloaded object. However, according to selection within that page, the television device may wish to display another page according to the data of another object.

In a distributed application environment, since the data making up a particular object is not immediately available, for instance because it is provided by a carousel, some time may be taken before the next object is downloaded and processed such that, for the above example, the next page is displayed.

This problem exists for any similar system in which objects are downloaded in this way.

Hence, the present invention is provided to overcome the delays occurring in such systems.

According to the present invention, there is provided a method of downloading application data from a distributed application environment, the method including:
requesting the downloading of a target object;
downloading the target object;
processing the target object; and
where necessary, requesting the downloading of another object on which the target object depends, the method further including:
   simultaneous with processing the target object, object parsing the target object so as to determine all of the objects on which the target object depends and downloading said objects; and
   storing said objects such that said another object can be retrieved in response to the step of requesting the downloading of said another object.

According to the present invention, there is provided a method of downloading application data from a distributed application environment with a device including an object loader for downloading objects and a controller for requesting the object loader to download a target object, for processing the target object and, where necessary, for requesting the object loader to download another object on which the target object depends, the method including:
object parsing the target object so as to determine all of the objects on which the target object depends;
downloading said objects; and
storing said objects such that said object loader can retrieve said another object in response to the request to download said another object.

According to the present invention, there is provided a device for downloading application data from a distributed application environment including:
an object loader for downloading objects; and
a controller for requesting the object loader to download a target object, for processing the target object and, where necessary, for requesting the object loader to download another object on which the target object depends, the device further including:
   a preloader operable simultaneously with the object loader for object parsing the target object so as to determine all of the objects on which the target object depends, for downloading said objects and for storing said objects, such that said object loader can retrieve said another object from the preloader when requested to download said another object.

In this way, when a target object is first downloaded, the preloader immediately determines all of the objects on which the target object depends. Thus, while the target object is being processed, the preloader may already be downloading the other objects required by the target object. By the time the target object requires reference to one of the other objects, that object may already have been downloaded by the preloader or, at least, the downloading will already be under way. In this way, the delays discussed above will be reduced if not eliminated.

Preferably, a plurality of section filters are provided, each for filtering out, from a received transport stream sections relating to a respective requested object.

The section filters thus simultaneously download different objects under the control of the object loader and preloader. The section filters may be MPEG section filters.

In a DVB-MHP environment, television receivers may often include a plurality of MPEG-2 section filters in the receiver's multiplexer hardware. By dedicating a plurality of these to DSM-CC, it is thus possible to download objects in parallel.

Thus, the preloader may be arranged to download different objects simultaneously from different respective section filters.

Preferably, a receiver memory is provided in which the preloader stores downloaded objects.

The receiver memory may be a dedicated memory, for instance as part of the preloader. However, the preloader may be provided in software. Thus, the receiver memory may in fact be an addressed area of a main memory common to various parts of the device.

Thus, objects downloaded by the preloader are stored in the receiver memory and are immediately available to the object loader when it is requested to download one of them.

Preferably, a file is kept for each application which is launched. This may correspond to the target object. The file contains a list of all of the objects on which the target object depends which require a long period to be downloaded.

In this way, when an application or target object is requested, the preloader can download all of the objects listed in the file first. Object parsing will only be necessary to determine the objects which can be downloaded more quickly.

Preferably, where objects are provided together in respective modules, the receiver memory is used to store entire modules.

Thus, during invocation of an application, if objects are available from a previously downloaded and stored module, the downloading times will be greatly reduced. The list in the file will, therefore, tend to represent those objects which have to be downloaded afresh.

The objects may include Java classes. This is particularly applicable when the invention is applied to the DVB-MHP environment. Thus, the device may be MHP compliant and may be a television device, for instance an integrated television or a set top box.

Where the objects are Java classes, the object loader may be a sequential Java class loader.

In this way, the loader downloads the Java classes required by the controller in sequence.

Preferably, the preloader conducts class parsing of a loaded class file so as to determine the other classes on which it depends.

It will be appreciated that the preloader may additionally object parse each of the objects on which the target object depends. In this way, the preloader may determine further objects on which the previously downloaded objects depend and download and store those further objects such that they can subsequently be retrieved without delay.

The object loader and controller may be implemented in software in conjunction with other functions of the device.

In this case, the preloader is preferably provided as an additional piece of software which may be loaded onto the device to enable it to function according to the present invention. In particular, the object loader may continue to operate in its previous sequential manner without particular knowledge of the operation of the preloader. Thus, the object loader still downloads the objects in sequence, but, according to the present invention, the preloader has previously downloaded or at least initiated downloading of the objects such that the object loader receives them more quickly than if it had to separately download them.

The invention will be more clearly understood from the following description, given by way of example only, with reference to the accompanying drawings, in which:
Figure 1 illustrates schematically a device embodying the present invention;
Figure 2 illustrates a scenario of objects;
Figure 3 illustrates the asynchronous preloading of the scenario of Figure 2;
Figure 4 illustrates a flow chart for preloading;
Figure 5 illustrates a flow chart for a DSM-CC call back function;
Figure 6(a) illustrates an example of inter dependencies; and
Figure 6(b) illustrates times for downloading the objects of Figure 6(a).

A preferred embodiment will be described with reference to the DVB-MHP environment and the downloading of Java classes. However, it will be appreciated that the invention is applicable to any distributed application environment, particularly with large file-access latencies, and to any form of object to be downloaded.

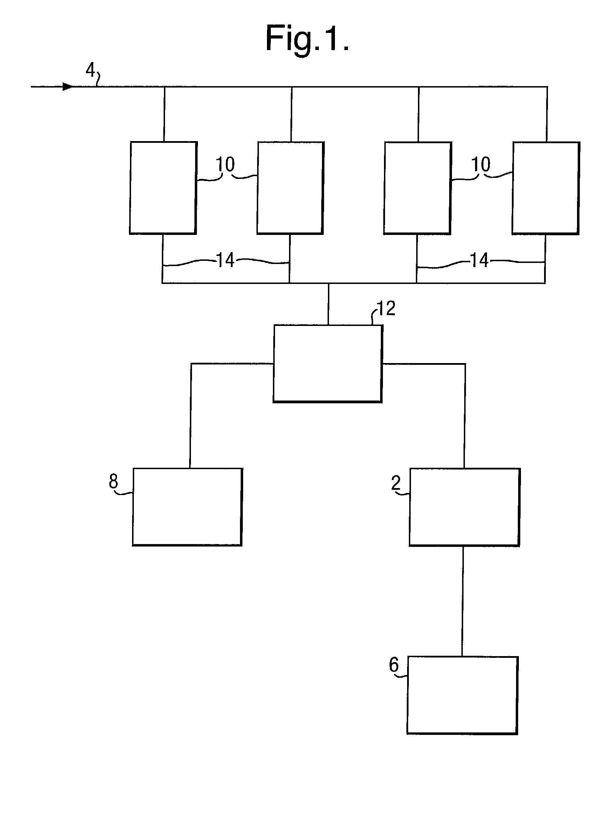

Figure 1 illustrates schematically a device embodying the present invention. In particular, an object loader 2 downloads objects from a transport stream 4. This may be under the control of a controller 6. However, in practice, there may not be a clear distinction between the object loader and the controller 6. Furthermore, for reasons to be discussed below, the object loader 2 may download objects via a low level loader 12.

An object is downloaded and then processed according to the nature of that object. Thus, in the context of this embodiment, the object could comprise the data necessary to display a particular interactive television page. In general, any object is intended to perform a certain action or activity. This may be a high-level activity, such as displaying a message, or it may be a low-level activity, such as maintaining an internal database of names.

The transport stream 4 may carry various Java classes to be loaded. However, once a class is loaded, the classes on which it depends must also be loaded. In a distributed application environment with large file-access latencies, such as the DVB-MHP environment where the application is delivered via a DCM-CC carousel, this loading can take considerable time to complete.

In this embodiment, referring to Figure 1, the object loader 2 comprises a virtual machine class loader for loading the Java classes. As illustrated, a preloader 8 is also provided and this too may operate via the low level loader 12. It is separate to the VM class loader and may be a separate software component. It first loads the class file that is to be requested by the class loader 2 and then performs class parsing on the class file in order to find out what other classes it will need. The class file contains the information necessary to instantiate objects of a particular type. Thus, the class file also contains information about which other classes need to be loaded into the system in order to instantiate the class.

In this way, the preloader 8 can keep a list of classes still to be downloaded.

The preloader 8 may then perform asynchronous loading of all these classes. The classes may be stored in a receiver memory or object cache formed integrally with the preloader 8 or separately as part of the overall device. In this way, when a file is requested by the Java class loader 2, it will be likely that the file is already available in the receiver memory or object cache or that it is in the phase of being downloaded from the broadcast stream 4. This will typically result in faster class loading.

The list kept by the preloader 8 may also be ordered. In particular, where objects or classes have been downloaded on a previous occasion, the preloader 8 may keep a record of how long the downloads took. In this way, the preloader can order the list of currently outstanding requested classes such that those with longer download times are requested first.

In the case of MHP and digital TV receivers, it should be noted that many receivers may well be able to handle multiple parallel object downloads. Indeed, the device illustrated in Figure 1 is provided with a plurality of section filters 10. With this arrangement, the only physical limitation to how many objects may be downloaded in parallel is the number of section filters. Indeed, for the embodiment of the MHP environment, the section filters will comprise MPEG-2 section filters in the receiver's demultiplexer hardware. The only physical limitation will be the number of these section filters 10 which can be dedicated to DSM-CC.

The preloader 8 can accelerate the operation of the sequential Java class loader 2 by using parallel asynchronous loading of objects, such as DSM-CC files, that are requested by the class loader 2. In particular, the preloader 8 performs asynchronous loading of the classes identified by the class parsing such that the classes are downloaded in parallel via respective section filters 10.

This provides a mechanism which exploits the provision of the plurality of section filters. This is particularly significant if the class loader 2 has been implemented as a sequential class loader without any extra intelligence in the sense that it does not pre-fetch any classes which are expected to be loaded in the near future. The class loader 2 needs very few if any modifications, but the provision of the preloader 8 allows its operation to be accelerated.

Thus, in the usual course, the object or class loader 2 requests, via the low level loader 12, a section filter 10 to download a requested object or class. The low level loader 12 manages and controls the section filters 10 in response to the object loader 2. As the requested class or object is being downloaded, the preloader 8 which also communicates with the low level loader, parses the object or class. For instance, it parses the class file so as to determine all of the dependent classes.

On the basis of the dependent classes as determined by the preloader 8, the preloader 8 requests a plurality of classes and the low level loader 12 controls a plurality of section filters 10 such that they filter from the transport stream 4 the required objects or classes and provide these via data bus 14.

When it is determined that an object or class requires reference to another object or class, the object loader 2 attempts to download the required object or class and puts in a request to the low level loader 12. Thus, where the object has already been downloaded by the preloader 8, the low level loader 12 operates such that the object data is provided by the preloader 8 from the receiver memory to the object loader 2. In this way, the object loader 2 operates as it would have done without the preloader 8, but receives objects much faster. In the case that a required object has not been fully downloaded, the object loader 2 will receive part of the data from the preloader 8 and the remaining data from a section filter 10 as it arrives.

Preferably, as requested classes or objects arrive, they in turn are parsed and the objects or classes required by them are requested. Thus, there will be a recursive, asynchronous class loading carried out in parallel with the loading done by the object or class loader 2.

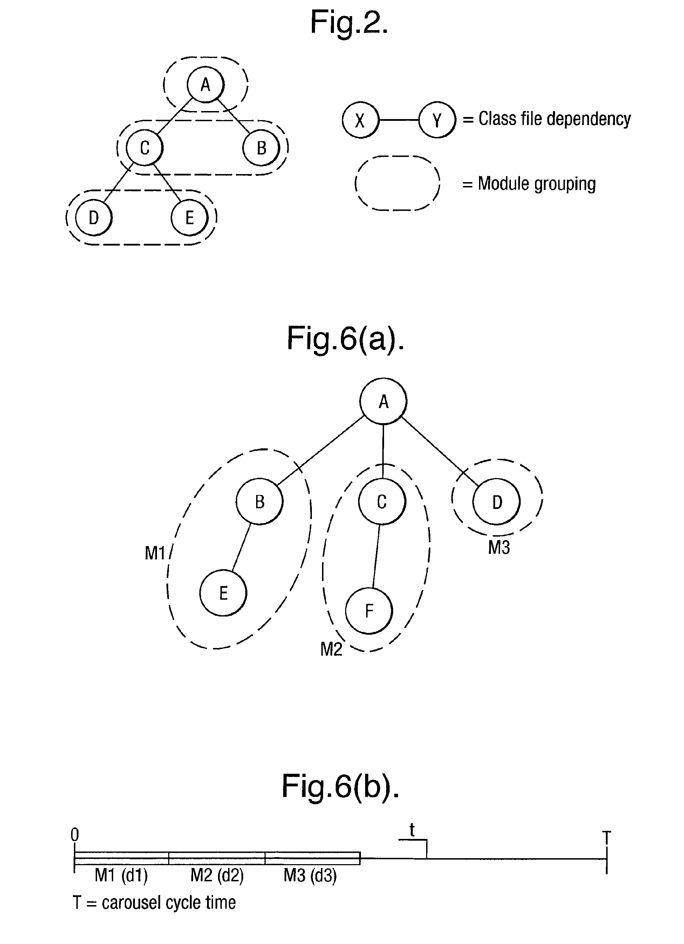

Figure 2 illustrates a scenario in which there is a main application class or target class A which in turn depends on class B and class C. Class C then itself needs classes D and E.

It will be appreciated that in certain distributed environments, such as DSM-CC, objects are grouped together in modules. Thus, as illustrated, class A is in one module, classes B and C are in another module and classes D and E are in a third module.

In order to download the data of one of the objects of a module, it is usually necessary to download the data of the entire module. Therefore, in a preferred embodiment, whenever either the object loader 2 or preloader 8 download an object, they store the entire module. Service providers usually arrange related objects in the same module. Hence, having stored an entire module, it is likely that related objects will already have been download, thereby allowing faster access times.

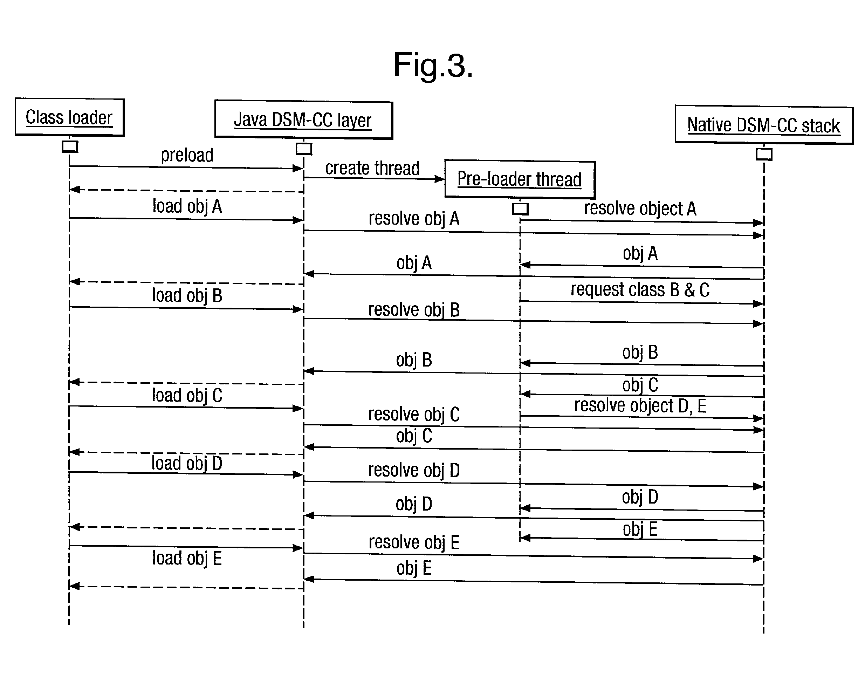

Figure 3 illustrates the steps conducted in downloading the various objects or classes.

The "Java DSM-CC" layer is a high level API that provides access to DSM-CC objects in a way which is very similar to how a local file system is accessed. The "Native DSM-CC stack" is the low-level software component that performs the actual download. This layer provides functionality particular to the nature of DSM-CC Object Carousels, i.e. parallel asynchronous loading of multiple objects.

The class loader 2 discovers that file A needs to be loaded, for instance under instructions from the controller 6. In response to this, a preloader thread is created. This corresponds to the schematic representation of the preloader 8. The class loader 2 indicates that the initial file to be loaded is file A and, file A is then requested by both the preloader thread 8 and the class loader 2.

When file A arrives, it is parsed by the preloader 8 and files B and C are immediately requested to be loaded by means of the section filters 10.

With file A loaded, it is processed in the usual way, for instance involving the controller 6. As a result of this, it is established that reference needs to be made to file B. Hence, the class loader 2 requests file B to be loaded.

When file B arrives, it is parsed by the preloader 8, but no new dependencies are discovered.

File B is returned to the class loader 2 in response to the previous request. During continued use of files A and B, no new dependencies are discovered for file B. However, it is determined that reference is required to file C. Hence, the class loader 2 requests file C.

When file C arrives, it is parsed by the preloader 8. The preloader 8 determines that file C is dependent on files D and E and, hence, requests, using the section filters 10, the downloading of these files.

File C is returned to the class loader 2. During subsequent processing, it is determined that file D is required and, hence, class loader 2 requests file D.

When file D arrives, the preloader 8 determines no new dependencies and file D is returned to the class loader 2. Once again, during processing, it is determined that file C is additionally dependent on file E and, hence, file E is requested.

When file E arrives, the preloader discovers no new dependencies and, hence, lets the thread run to completion.

File E is returned to the class loader 2 and the loading is complete.

Asynchronous preloading of application data can be used at application boot time to speed up the download of the initial application classes. However, it can also be used at other points in time. For example, the preloader 8 may be used whenever it is determined that the class loader 2 is about to load a class that has not already been loaded, since this may imply that the application is somehow changing its functional state. For example, a news application may enter a "weather forecast" mode and need to load classes specific to this mode. Thus, the preloader 8 can be used during the entire lifetime of an application in order to improve receiver performance and application responsiveness. Indeed, since broadcaster may optimise their applications for fast initial class loading during application boot time, the preloader 8 and the process which it conducts might be more valuable at such later transitional stages than during the application boot process.

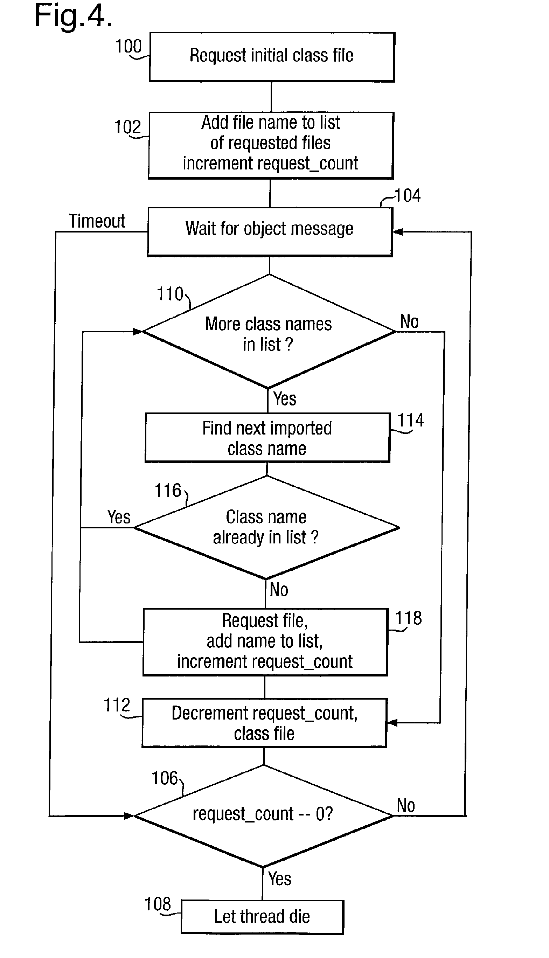

Figure 4 illustrates as a flow diagram the process discussed above.

In step 100, a request for the initial class file is made. For instance, this might come from the controller 6.

Step 102 represents a preferred feature by which the name of the requested file is added to a list of outstanding requested files. As mentioned, this list may be ordered according to previously established download times. A request count is also maintained. This count represents the number of outstanding requested files. Thus, at this stage, the request count is incremented. The request count keeps track of the number of issued but not yet completed requests issued to the native DSM-CC stack.

In step 104, the process awaits the downloading of one of the requested files. In this respect, it will be appreciated that the files may arrive in a different order to that in which they were requested. This is because files will become available at different times and will require different times for downloading.

After a predetermined time, if no requested file has been downloaded, a time out state is reached and the process moves to step 106. In this step, it is determined whether or not the request count equals zero. When request count reaches zero, then it is established that there will be no more object messages arriving and the thread may terminate.

If the request count is zero then the process may finish and, in step 108 the preloader thread may die. However, if the request count does not equal zero then the process returns to step 104.

Once an object message has arrived, in step 110, it is determined whether that loaded class is dependent on any other classes. A dependency list of such dependencies and the class names of them is established. It is then determined whether or not any class names exist in that dependency list or, as the process cycles around, whether or not there are any more class names on the dependency list.

Thus, there are two lists in the scenario. One list is maintained by the preloader. This list contains the outstanding load requests. The other list, the dependency list, is a list that is found in the class file itself - this is a list over all the files that the class file depends on.

If there are no class names or no more class names, then the process proceeds to step 112 where the request count is decremented to indicate that one of the requested files has arrived. In other words, since an object message has arrived and been checked for any other dependencies, the count of outstanding classes can be decremented by one.

The file that was just loaded from the Object Carousel is then closed. Closing it allows for it to be deleted from memory.

If the dependency list for the newly arrived object messages does include one or more class names, then, in step 114, the process chooses one of the imported class names, i.e. the classes upon which the loaded class depends.

In step 116, it is determined whether or not the class name is already in the list maintained by the preloader.

If the name is already in the list, then the process returns to step 110. However, if it is not, that file is requested, the name is added to the list and the request count is incremented in step 118.

Hence, the process checks each downloaded class to determine whether or not it depends on any other class not already being downloaded by the preloader. If necessary, additional classes are thus added to the list of classes to be downloaded.

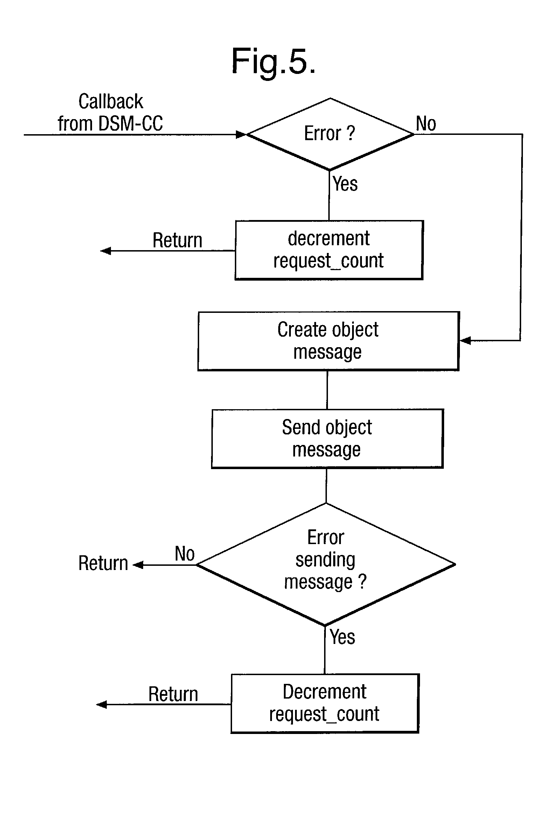

Figure 5 illustrates the origin of the "object messages" that the preloading thread is waiting for. The object message embodies the loaded class file. The message is sent to a message queue where the preloader thread reads the message.

The flow chart in Figure 5 illustrates the callback that is invoked by the DSM-CC stack when a loading has finished. It is important to realise that this flow chart will be executed on the thread of the DSM-CC stack, not on the thread of the preloader. The reference count is used to keep track of the number of outstanding load requests; This,is the same as the reference count described above. The object message provides the low-level DSM-CC stack to asyncronously deliver a loaded object to another thread of execution for further processing. This is because the actual processing is not to take place in the thread of the DSM-CC stack - this thread should be available to process arriving DSM-CC sections. If there is an error in loading or an error when sending the message, then the callback will simply decrement the reference count and return. The callback function itself returns no value.

An example of the process discussed above will be given below.

The following example demonstrates further how the mechanism will increase class loading efficiency. In this example, we imagine the loading of class A, which depends on B, C, D, E, F. Classes B and E are carried in module 1 (M1). Classes C and F are carried in module 2 (M2) and class D is carried in module 3 (M3). The receiver implements transparent caching as it has been defined by DVB-MHP. This means that before it can return a module already available in the system memory, it will have to verify the module's version against a DownloadInfoIndication (DII) message from the stream.

The following assumptions are made:
- the average time it takes to wait for a DII message is t_{DII};
- the time it takes to parse a class is tₚ;
- download time for M1, M2, M3 are approximately the same value, tX (i.e. the modules are of similar size);
- the relationship tₚ and t_{DII} and a module download time is such that 0.5tX < tₚ + t_{DII} < tX;
- the parsing of class A starts at a time t, which is somewhere after the modules have appeared in the carousel;
- the receiver has enough section filters available to download the three modules in parallel;
- total carousel cycle time is T.

With all these assumptions made, the time it will take to load all the classes using only sequential class loading can be calculated as follows:
- time to parse class A and load class B: tₚ + T - t + t1;
- time to parse class B and load class E: tₚ + t_{DII};
- time to parse class E and load class C: tₚ + T (because the load request will be issued somewhere in the middle of t2);
- time to parse class C and load class F: tₚ + t_{DII};
- time to parse class F and load class D: tₚ + T (because the request will be issued somewhere inside d3);

This yields a resulting total load time of 3T - t + 5tₚ + 2t_{DII} + t1. If the preloading mechanism described in this document is used, the maximum total load time will instead become T - t + t1 + t2 + t3 + 5tₚ + 2t_{DII};

The time gained will then become 2T - t2 - t3.

Assuming the following figures:
- T = 20 seconds
- tX = 1 second (i.e. the approximate load time for a 64 kB module streamed at 500 kb/s);
the time gained becomes 38 seconds.

What is perhaps the most important thing to notice in this example is that the time it takes for a sequential class loader to load all the classes it needs can easily be in the order of N*T, where T is the carousel cycle time and N is the total number of modules that needs to be loaded. If the preloader mechanism proposed in this document is used, the total load time will instead be in the order of T*f (class tree), where f (class tree) is a function whose value indicates how well the carousel is organised from a point of view of parallel preloading (the value will vary between 1 and N). As the preloader mechanism takes advantage of the fact that multiple downloads can be carried out in parallel, the dependency on the underlying carousel structure in order to achieve fast class loading is reduced.

With regard to the processes discussed above, it will be appreciated that often an application will not be modified between two invocations. Thus, between the initial invocation of an application and the moment when the application is completely ready to be started, it is very likely that the same classes will be required. Similarly, upon subsequent invocations of an application, it is likely that the same classes will be required.

When an application starts, its behaviour is normally defined by the user. Therefore, the classes which have to be loaded during an application's lifetime are not necessarily identified from one execution to the other.

It will be appreciated that there is not a uniform distribution of loading times for the various objects or classes required by an application.

As mentioned above, entire modules are normally stored in memory. Therefore, where a class or object is part of a new module, i.e. a module which has not been loaded before and is not in memory, the downloading will take much more time than for a similar class or object from an "already-seen" module stored in memory.

In its most simple form, the preloader operation described above does not know anything about the membership of a module and, therefore, does not know whether an object or class is available from a module which has already been downloaded. The preloader merely downloads the classes or objects in the order in which they are required by the class or object loader.

Thus, as mentioned above, it is now proposed that where a class or object needs a very long time to be loaded, loading of this class is started earlier. In this respect, it is proposed that, every time an application is loaded, a file is created that will contain an ordered list of all the names of the classes or objects that previously needed a long period to be loaded. In other words, it stores a list of all of the classes or objects which, during the previous invocation of the application, had to be downloaded from the received transport stream and were not available from modules previously stored in memory.

If the carousel is re-organised, the file will be updated next time the application is launched.

Only the names of the classes loaded prior to application launch are stored in the file.

Thus, when a request is made for an application to be loaded, a check is first made to see if this application has been loaded before. In this respect, a check may be made to see if a corresponding file exists. If it does exist, it is parsed and the classes or objects are loaded immediately. Indeed, loading of the classes or objects listed in the file may start before the loading of the first class of the application has really started.

In this way, by keeping a small file describing the application's class loading profile, it is possible to provide faster downloading of an application.

## Claims

1. A device for downloading application data from a distributed application environment including:
an object loader for downloading objects; and
a controller for requesting the object loader to download a target object, for processing the target object and, where necessary, for requesting the object loader to download another object on which the target object depends, the device further including:
a preloader operable simultaneously with the object loader for object parsing the target object so as to determine all of the objects on which the target object depends, for downloading said objects and for storing said objects, such that said object loader can retrieve said another object from the preloader when requested to download said another object.

2. A device according to claim 1 further including a plurality of section filters, each for filtering out, from a received transport stream, sections relating to a respective requested object.

3. A device according to claim 2 wherein the section filters are MPEG section filters.

4. A device according to claim 2 or 3 wherein the preloader is arranged to download different objects simultaneously from different respective section filters.

5. A device according to any preceding claim wherein the preloader is arranged to download a plurality of said objects simultaneously.

6. A device according to any preceding claim wherein the preloader additionally object parses each of said objects so as to determine further objects on which said objects depend, downloads said further objects and stores said further objects.

7. A device according to any preceding claim further including a receiver memory in which the preloader stores downloaded objects.

8. A device according to any preceding claim wherein the objects include Java classes.

9. A device according to claim 8 wherein the object loader is a sequential Java class loader.

10. A device according to claim 8 or 9 wherein the preloader conducts class parsing of a loaded class file.

11. A device according to any preceding claim further including:
a memory for storing a file for each previously downloaded target object, the file containing a list of the objects on which the target object depends which require the most time to download; wherein
the preloader downloads the objects identified in the file first.

12. A device according to any preceding claim wherein, where the objects are provided together as part of modules, when the object loader or preloader downloads an object, the entire module for that object is stored in memory.

13. A device according to any preceding claim which is MHP compliant.

14. A device according to any preceding claim which is a television device.

15. A method of downloading application data from a distributed application environment, the method including:
requesting the downloading of a target object;
downloading the target object;
processing the target object; and
where necessary, requesting the downloading of another object on which the target object depends, the method further including:
simultaneous with processing the target object, object parsing the target object so as to determine all of the objects on which the target object depends and downloading said objects; and
storing said objects such that said another object can be retrieved in response to the step of requesting the downloading of said another object.

16. A method of downloading application data from a distributed application environment with a device including an object loader for downloading objects and a controller for requesting the object loader to download a target object, for processing the target object and, where necessary, for requesting the object loader to download another object on which the target object depends, the method including:
object parsing the target object so as to determine all of the objects on which the target object depends;
downloading said objects; and
storing said objects such that said object loader can retrieve said another object in response to the request to download said another object.

17. A computer readable storage medium having recorded thereon code components that, when loaded on a computer and executed, will cause that computer to operate according to any one of the preceding claims.
